(19) Europäisches Patentamt
European Patent Office
Office européen des brevets

(11) EP 4 212 322 A1

(12) # EUROPEAN PATENT APPLICATION

(43) Date of publication:
**19.07.2023 Bulletin 2023/29**

(21) Application number: **22151554.7**

(22) Date of filing: **14.01.2022**

(51) International Patent Classification (IPC):
***B29C 70/44*** *(2006.01)* ***B32B 27/40*** *(2006.01)*
***B32B 27/30*** *(2006.01)* *C08G 18/67 (2006.01)*
*C08L 75/16 (2006.01)* *C08F 290/06 (2006.01)*
*C08G 18/16 (2006.01)* *C08G 18/40 (2006.01)*
*C08G 18/72 (2006.01)* *C08K 5/07 (2006.01)*
*C08L 75/04 (2006.01)*

(52) Cooperative Patent Classification (CPC):
**B29C 70/44; B29C 70/443; B32B 27/308; B32B 27/40; C08G 18/672; C08L 75/04; C08L 75/16;** C08F 290/067

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventors:
- **ZHENG, Ian**
**Jinshan District**
**201500 Shanghai (CN)**
- **GU, Yongming**
**201208 Pudong New District (CN)**
- **WU, Di**
**201206 Pudong New District**
**Shanghai (CN)**
- **HAN, Xiaojun**
**200237 Xuhui District**
**Shanghai (CN)**
- **ZHANG, Hui**
**201599 Jinshan District**
**Shanghai (CN)**

(74) Representative: **Levpat**
**c/o Covestro AG**
**Gebäude K12**
**51365 Leverkusen (DE)**

(54) **A METHOD FOR PROCESSING A MATERIAL**

(57) The invention relates to a method for processing a material, and a method for preparing a resin composite, the resin composites prepared by the method and use thereof.

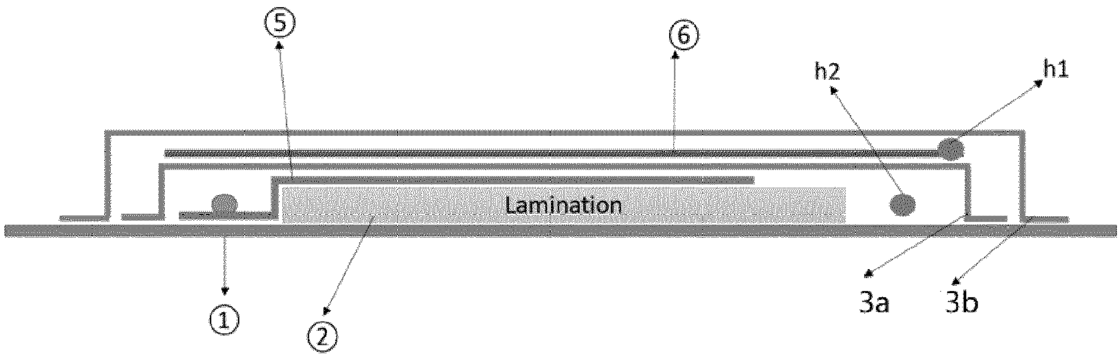


Fig. 1

EP 4 212 322 A1

## Description

### Technical field

The invention relates to a method for processing a material, and a method for preparing a resin composite, the resin composites prepared by the method and use thereof.

### Prior art

In recent years, more and more attention has been paid to the superiority of resin composites, especially polyurethane composites, in a variety of applications, including large-scale products/components, such as wind turbine blades. However, the surface of the resin composites is prone to surface problems such as blisters, which affects the use, appearance or further processing.

CN106142593B discloses a method for manufacturing fiber-reinforced plastic products. This method includes the following steps: preparing a fiber preform on a mold; disposing a first and a second flow mesh and a first and a second peel ply on the fiber preform; sealing the fiber preform and forming a vacuum system by vacuumizing; penetrating the first peel ply with the resin via the first flow mesh and impregnating the fiber preform from bottom to top; penetrating the second peel ply with the resin via the second flow mesh and impregnating the fiber preform from top to bottom; and attaining a resin-impregnated fiber perform and finally attaining fiber-reinforced plastic products.

CN110625843A discloses a method for drying a core material for resin composites, preferably polyurethane composites, comprising the following steps: placing a core material on a supporting device, covering the core material with at least a film, sealing the periphery of the film and the device, and reserving at least a channel; and heating the core material, and vacuumizing the closed space defined by the film and the device via the channel until the core material is dried.

CN112912236A discloses a method for producing a fiber-reinforced composite part by means of vacuum infusion of reactive resin mixtures.

Despite the above disclosures, the market still urgently needs more efficient and better methods for processing a material used for preparing resin composites.

### Summary of invention

One aspect of the present invention is to provide a method for processing a material, especially for processing a material used for preparing resin composites, including:

placing at least a reinforcing material (2), optionally a core material (4), and optionally a flow medium (5) in a mold (1); covering the at least a reinforcing material (2), optionally a core material (4), and optionally a flow medium (5) with at least two films (3a, 3b);

placing at least a gas-permeable material (6) between the at least two films (3a, 3b);

sealing the peripheries of the at least two films (3a, 3b) and arranging at least an air outlet h1 (h1) for vacuumizing between the at least two films (3a, 3b), and sealing the periphery of the mold (1) and the periphery of the film (3a) close to the mold and arranging at least an air outlet h2 (h2) for vacuumizing between the mold (1) and the film (3a) close to the mold, vacuumizing being carried out through the air outlet h1 (h1) and the air outlet h2 (h2).

The material in the method for processing a material of the present invention refers to a reinforcing material, a flow medium (optionally), a core material (optionally), preferably, also a peel ply, and other materials needed or available for further production and processing.

Preferably, the gas-permeable material (6) covers at least partially the upper surface (2a) of the reinforcing material (2) or the flow medium (5), preferably a surface area of ≥60%, more preferably a surface area of ≥70%, particularly preferably a surface area of ≥95%, more particularly preferably a surface area of 100% of the upper surface (2a) of the reinforcing material (2), the core material or the flow medium. The expression "the gas-permeable material (6) covers at least partially the upper surface (2a) of the reinforcing material (2) or the flow medium (5)" means that the gas-permeable material covers the upper surface of the reinforcing material or the flow medium in such a way that at least a film is located between gas-permeable material and the upper surface of the reinforcing material or the flow medium.

Preferably, the processing temperature applicable for the method is <60°C, preferably <50°C, more preferably ≤40°C, particularly preferably.

Preferably, the method does not include heating.

Preferably, the time required for the processing is <5 hours, preferably ≤4 hours, more preferably ≤3 hours, particularly preferably ≤2.5 hours.

Preferably, the processing time required for the method with the step c) is reduced by ≥10%, preferably ≥20%, more preferably ≥40%, compared with that for the method without the step c). Specifically, if the processing time required for the method without the step c) is P and the processing time required for the method with the step c) is Q usually at the same temperature, then the processing time required for the method with the step c) is reduced by a value of (P - Q)/P* 100%.

Preferably, the temperature required for the method with the step c) is reduced by ≥10%, preferably ≥ 20%, more preferably ≥30%, compared with that for the method without the step c) usually for the same time. Specifically, if the temperature required for the method without the step c) is X°C and the temperature required for the method with the step c) is Y°C usually in the case for the same time, then the processing temperature required for the method with the step c) is reduced by a value of (X - Y)/X* 100%.

Preferably, the resin is selected from polyurethane, and the polyurethane is prepared by the reaction of a polyurethane composition comprising:

component A including:

A1) one or more polyisocyanates;
A2) at least a free radical initiator;
A3) at least a β-dicarbonyl compound.

Preferably, the content of A3) β-dicarbonyl compound is 0.005-2% by weight, preferably 0.012-1.8% by weight, more preferably 0.012-0.048% by weight, based on the total weight of the isocyanate composition being 100% by weight.

Preferably, the resin is selected from polyurethane, and the polyurethane is prepared by the reaction of a polyurethane composition comprising:

component B) including:

B1) one or more organic polyols,
B2) one or more compounds with the structure of formula (I):

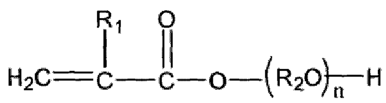

I

wherein R1 is selected from hydrogen, methyl or ethyl; R2 is selected from alkylene groups having 2-6 carbon atoms, propane-2,2-bis(4-phenylene), 1,4-xylylene, 1,3-xylylene, 1,2-xylylene; n is an integer selected from 1-6.

Preferably, the resin is selected from polyurethane, and the polyurethane is prepared by the reaction of a polyurethane composition comprising:
B3) at least a polyfunctional (meth)acrylate without hydroxyl group.

Preferably, the component B3) is selected from ethylene glycol di(meth)acrylate, propylene glycol di(meth)acrylate, butylene glycol di(meth)acrylate, 1,6-hexanediol di(meth)acrylate, diethylene glycol di(meth)acrylate, triethylene glycol di(meth)acrylate, dipropylene glycol di(meth)acrylate, tripropylene glycol di(meth)acrylate, trimethylolpropane tri(meth)acrylate, 1,2,3-propanetriol tri(meth)acrylate, pentaerythritol tetra(meth)acrylate or combinations thereof.

The second aspect of the present invention is to provide a method for preparing a resin composite, including:

the method for processing a material used for preparing resin composites of the present invention as descried above; introducing a resin composition and curing to prepare the resin composite.

Preferably, the resin composition comprises:

component A), including:

A1) one or more polyisocyanates;
A2) at least a free radical initiator;
A3) at least a β-dicarbonyl compound.

Preferably, the resin composition comprises:

component B), including:

B1) one or more organic polyols,
B2) one or more compounds with the structure of formula (I):

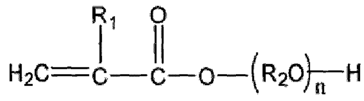

I

wherein R1 is selected from hydrogen, methyl or ethyl; R2 is selected from alkylene groups having 2-6 carbon atoms, propane-2,2-bis(4-phenylene), 1,4-xylylene, 1,3-xylylene, 1,2-xylylene; n is an integer selected from 1-6.

Preferably, the method for introducing the resin composition is selected from a pultrusion molding process, a winding molding process, a hand lay-up molding process, a vacuum infusion process, an injection molding process, or a combination thereof.

Preferably, the reinforcing material is selected from glass fibers, carbon nanotubes, carbon fibers, polyester fibers, natural fibers, aramid fibers, nylon fibers, basalt fibers, boron fibers, silicon carbide fibers, asbestos fibers, whiskers, hard particles, metal fibers or a combination thereof. It can also include glass fiber entangled layers, glass fiber fabrics and glass fiber gauzes, cut or crushed glass fibers or mineral fibers, and fiber felts, fiber non-woven fabrics and fiber knitted fabrics based on polymer fibers, mineral fibers, carbon fibers, glass fibers or aramid fibers, and mixtures thereof.

Preferably, the core material is preferably balsa wood, PVC foam, SAN foam, polyurethane foam, PS foam, PMI foam and PET foam.

Preferably, the component B2) is selected from one, two or more than two of hydroxyethyl methacrylate, hydroxypropyl methacrylate, hydroxybutyl methacrylate, hydroxyethyl acrylate, hydroxypropyl acrylate and hydroxybutyl acrylate.

Preferably, the method further includes: the heating temperature for curing is 40-90°C, preferably 40-85°C.

Another aspect of the present invention is to provide a laminate, including:

at least a reinforcing material (2), optionally a core material (4), and optionally a flow medium (5);
at least two films (3a, 3b) covering the at least a reinforcing material (2), optionally a core material (4), and optionally a flow medium (5);
at least a gas-permeable material (6) located between the at least two films (3a, 3b);
wherein the peripheries of the at least two films (3a, 3b) are sealed and at least an air outlet h1 (h1) for vacuumizing is arranged between the at least two films (3a, 3b), and the periphery of the mold (1) and the periphery of the film (3a) close to the mold are sealed and at least an air outlet h2 (h2) for vacuumizing is arranged between the mold (1) and the film (3a) close to the mold.

Preferably, the laminate is used for a vacuum infusion process, more preferably a polyurethane vacuum infusion process.

Preferably, the gas-permeable material (6) covers at least partially the upper surface (2a) of the reinforcing material (2) or the flow medium (5). The gas-permeable material (6) covers at least partially a surface area of ≥60%, more preferably a surface area of ≥70%, particularly preferably a surface area of ≥95%, more particularly preferably a surface area of 100% of the upper surface (2a) of the reinforcing material (2), the core material or the flow medium.

Preferably, the laminate further includes a peel ply. The peel ply is preferably a polyester peel ply.

Preferably, the time required for processing the material using the laminate with iii) is reduced by ≥10%, preferably ≥20%, and more preferably ≥40%, compared with that using the laminate without iii).

Still another aspect of the present invention is to provide a resin composite, preferably a polyurethane composite, prepared by the aforementioned method for processing a material of the present invention.

Aother aspect of the present invention is to provide a polyurethane product comprising a resin composite, preferably a polyurethane composite, prepared by the method for preparing a resin composite, preferably a polyurethane composite of the present invention as described above.

Preferably, the polyurethane product is selected from wind turbine blades, radomes, ship parts, rails, cable trays, curtain wall frames for doors and windows, ladder frames, tent poles or pipes, anti-glare panels, floors, sucker poles, telegraph poles and cross arms, guardrails, grilles, profiles for construction, profiles and plates for container, bicycle racks, fishing poles, cable cores, insulator core rods, radomes, single-layer or sandwich continuous plates, wind turbine blades, preferably blade shells, web plates, spar caps, main beams, auxiliary beams and blade roots of wind turbine blades.

We unexpectedly discovered that the method for processing a material of the present invention including "placing at least a gas-permeable material between the at least two films" and other features compatible with it can achieve very satisfactory processing effect. By this method, the material (including but not limited to the gas-permeable material, the core material, the flow medium, the peel ply, etc.) for preparing resin composites, preferably polyurethane composites can be dried more effectively in a shorter time, while no heating is required. This method enables the prepared resin composites, preferably polyurethane composites to have a very unexpectedly smooth surface, which is fully beneficial to subsequent further processing and production. There is no need for heating treatment, which is very beneficial to the improvement of related process efficiency. If heated is carried out, it takes a lot of time to cool down after the processing is completed, which will cause the time point for introducing the resin composition to be further delayed. The solution of the present invention can realize drying/dehumidification treatment of high-efficiency without heating, which greatly improves the efficiency of related production processes.

In addition, we found unexpectedly that all the gas-permeable materials of different grammage can achieve the aforementioned satisfactory effect.

In the present invention, polyurethane resins are preferred. Polyurethane resins have a greatly reduced viscosity, compared with that of epoxy resins, and have very good weather resistance and fatigue resistance, which can ensure the service life of composite parts. The polyurethane composition of the present invention has a short curing cycle, can improve the utilization rate of equipment. The residual amount of resin in the production process is easier to control, which can reduce the production costs. The polyurethane composition of the present invention is unfoamed, does not contain a foaming agent, and cannot even contain water. Since the polyurethane composition may react with moisture to foam, it needs to be dried when it is used for composites. Moreover, it is difficult to control the humidity of the production environment of large composite articles, and the materials cannot be dried in advance.

Through repeated experiments, we unexpectedly discovered that the method of the present invention can process related materials simply, objectively and effectively, thereby greatly saving energy, and saving time for processing or drying. This improves production efficiency, saves resources, and is more beneficial to environmental protection.

In addition, the polyurethane composition contained in the method of the present invention has a long operable time, so that resin composites, preferably polyurethane composites with uniform quality and excellent physical properties can also be obtained when preparing large-scale polyurethane products. In particular, for large polyurethane products, the method of the present invention provides an effective solution for the severe application conditions of polyurethanes (for example, sensitivity to water), realizes high production efficiency, saves costs, and is more environmentally friendly.

## Description of drawings

The present invention will be exemplified below in conjunction with the drawings, in which:

Figure 1 shows the method of processing a material according to an example of the present invention and the laminate of the present invention, in which 1 represents a mold; 2 represents a reinforcing material; 2a represents a reinforcing material; 3a and 3b represent film/film; 5 represents a flow medium; 6 represents a gas-permeable material; h1 represents an air outlet hi; h2 represents an air outlet h2.

Figure 2 shows a photograph of the surface condition of the polyurethane composite prepared in Example 1 of the present invention.

Fig. 3 shows a photograph of the surface condition of the polyurethane composite prepared in Example 2 of the present invention.

Fig. 4 shows a photograph of the surface condition of the polyurethane composite prepared in Example 3 of the present invention.

Fig. 5 shows a photograph of the surface condition of the polyurethane composite prepared in Example 4 of the present invention.

Fig. 6 shows a photograph of the surface condition of the polyurethane composite prepared in Comparative Example 1 of the present invention.

Fig. 7 shows a photograph of the surface condition of the polyurethane composite prepared in Comparative Example 2 of the present invention.

## Embodiments

Various aspects of the present invention will now be described in detail.

The material in the method for processing a material of the present invention includes a variety of materials, such as the reinforcing material, the flow medium, the gas-permeable material, and the peel ply.

The reinforcing material that can be used in the present invention refers to a material that can be tightly combined with resins and improve the mechanical properties of products. The reinforcing material of the present invention includes

glass fibers, carbon nanotubes, carbon fibers, polyester fibers, natural fibers, aramid fibers, nylon fibers, basalt fibers, boron fibers, silicon carbide fibers, asbestos fibers, whiskers, hard particles, metal fibers or a combination thereof. It can also include glass fiber entangled layers, glass fiber fabrics and glass fiber gauzes, cut or crushed glass fibers or mineral fibers, and fiber felts, fiber non-woven fabrics and fiber knitted fabrics based on polymer fibers, mineral fibers, carbon fibers, glass fibers or aramid fibers, and mixtures thereof.

The flow medium that can be used in the present invention refers to a material with a porous structure, which can be a material obtained by plaiting, weaving, knitting, extrusion or crocheting, a foam, or a material with a sieve or mesh structure. Specifically, it includes but is not limited to woven flow mesh, compressed flow mesh, continuous fiber felt; also hybrid flow mesh, for example, made of mixture of two or more than two of fiber fabrics, such as woven flow mesh, compressed flow mesh, continuous fiber felt and chopped fiber felt. Those skilled in the art know that materials which can be used as flow medium include, but are not limited to, polystyrene (PS), polyurethane (PUR), polyphenylene oxide (PPO), polypropylene, ABS, and glass fiber fabrics. The porous member or the flow medium is mainly used to help vacuumizing during the drying process and help flow-guiding during the introduction of the polyurethane composition/liquid material.

The gas-permeable material which can be used in the present invention refers to a material that has certain gas permeability or can form gas-guiding channels, including various fabrics, gas-permeable membranes, flow media, various felts, various net-like materials, and the like. They can be selected from flow meshes, peel plies, other fabrics and so on.

The peel ply that can be used in the present invention, preferably a polyester peel ply, refers to a peel ply made of polyester fiber. Polyester fiber (polyester fibre), referred to as PET fiber, commonly known as "dacron", refers to the general term for fibers made of polyester as the raw material, which is produced by polycondensation of a variety of diols and aromatic dicarboxylic acids or esters thereof. Preferably, the polyester peel ply is selected from a plain weave fabric, a twill weave fabric, a satin weave fabric made from continuous fibers by a weaving method, or a fabric made by a knitting method, or a fabric made directly by a stitch-bonding method.

The peel ply can be placed between the reinforcing material and the mold, or between the reinforcing material and/or the core material and the flow medium (for example, a flow mesh).

The film that can be used in the present invention refers to a material that can be used for covering and is impermeable to gas at a certain temperature. The film of the present invention includes, but is not limited to, bag films, optical films, composite films, superconducting films, polyester films, nylon films, plastic films, aluminized films, and the like. The plastic films include films made of polyvinyl chloride, polyethylene, polypropylene, polystyrene and other resins.

The polyisocyanate of the present invention may be an organic polyisocyanate. The organic polyisocyanate may be any aliphatic, alicyclic or aromatic isocyanate known to be used for preparing resin composites, preferably polyurethane composites. Examples thereof include, but are not limited to, toluene diisocyanate (TDI), diphenylmethane diisocyanate (MDI), polyphenylpolymethylene polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylylene diisocyanate (XDI), tetramethylxylylene diisocyanate (TMXDI) and their polymers or combinations thereof. The functionality of the isocyanate that can be used in the present invention is preferably 2.0-3.5, particularly preferably 2.1-2.9. The viscosity of the isocyanate is preferably 5-700 mPa·s, particularly preferably 10-300 mPa·s, measured at 25° C according to DIN 53019-1-3.

When used in the present invention, the organic polyisocyanate includes dimers, trimers, tetramers, pentamers of isocyanates, or combinations thereof.

In a preferred embodiment of the present invention, the isocyanate of component A) is selected from diphenylmethane diisocyanate (MDI), polyphenylpolymethylene polyisocyanate (pMDI), and their polymers, prepolymers or combinations thereof.

A blocked isocyanate can also be used as the isocyanate of component A), which can be prepared by reacting an excess of organic polyisocyanate or a mixture thereof with a polyol compound. Those of ordinary skill in the art are familiar with these compounds and their preparation methods.

The free radical initiator that can be used in the present invention refers to a reagent capable of generating free radicals in a free radical reaction. It can also be called a radical initiator. The process of generating free radicals is called chain initiation. The free radical initiators that can be used in the present invention include, but are not limited to, peroxy compound initiators, azo initiators, and redox initiators, and the like. Peroxide initiators are further divided into organic peroxide initiators and inorganic peroxide initiators. The general structural formula of the organic peroxy compound is R-O-O-H or R-O-O-R, wherein R is an alkyl group, an acyl group, a carbonate group, and the like. It further includes: acyl peroxides, such as benzoyl peroxide, lauroyl peroxide; hydroperoxides, such as cumene hydroperoxide, tert-butyl hydroperoxide; dialkyl peroxides, such as di-tert-butyl peroxide, dicumyl peroxide; ester peroxides, tert-butyl peroxybenzoate, tert-butyl peroxypivalate; ketone peroxides, such as methyl ethyl ketone, cyclohexanone peroxide; dicarbonate peroxides, such as diisopropyl peroxydicarbonate, dicyclohexyl peroxydicarbonate. The azo initiators can be selected from azobisisobutyronitrile, azobisisoheptonitrile or a mixture thereof.

The β-dicarbonyl compound of the present invention refers to any compound in which two carbonyl groups in the molecule are separated by one saturated carbon atom. The two carbonyl groups can be the carbonyl groups of ketones and aldehydes, or the carbonyl groups of carboxylic acids or esters. They can be the carbonyl groups at 1, 3 positions in the IUPAC nomenclature, or two carbonyl groups (C=O) that are not at the 1, 3 positions defined by the IUPAC nomenclature in a larger molecule, but are still separated by one carbon atom. Specifically, β-dicarbonyl compounds may include β-diketones, such as CH3COCH2COCH3; β-keto acids and esters, such as CH3COCH2COOCH3; acids and esters, such as C2H5OOCCH2COOC2H5. They can be selected from nonane-4,6-dione, hexane-2,4-dione, 5-methylhexane-2,4-dione, acetylacetone, 1-phenyl-1,3-butanedione, 3,3-dimethylpentane-2,4-dione or a mixture thereof, preferably acetylacetone, hexane-2,4-dione or a mixture thereof, more preferably acetylacetone.

β-dicarbonyl compounds or ester compounds of β-keto acids can be prepared by Claisen condensation reaction of esters. An ester (e.g. ethyl acetate) is condensed under the catalysis of strong base (e.g. sodium ethoxide) and acidified to obtain the ester of β-keto acid (ethyl acetoacetate). The malonic acid compound can be obtained by the reaction of α-halogeno acid salt with NaCN and then hydrolysis (acidification).

The acetylacetone of the present invention is also known as 2,4-pentanedione. Acetylacetone can be prepared by acylation of acetone with acetic anhydride in the presence of boron trifluoride, or can be prepared by condensation of acetone and ethyl acetate.

In particular, we unexpectedly discovered after repeated experiments that the method of the present invention including the aforementioned isocyanate composition can provide a storage-stable isocyanate composition simply, economically and efficiently, and effectively extend the shelf life of the isocyanate composition. Thus, not only polyurethane resins with excellent quality can be prepared, but also the process can be simplified, and the yield and production efficiency can be improved.

The resin (polyurethane) composition of the present invention contains one or more organic polyols B1). The content of the organic polyol is 21-60% by weight, based on the total weight of the polyurethane composition being 100% by weight. The organic polyol may be an organic polyol commonly used in the art for preparing polyurethanes, including but not limited to polyether polyols, polyether carbonate polyols, polyester polyols, polycarbonate diols, polymeric polyols, vegetable oil-based polyols, or combinations thereof.

The polyether polyol can be prepared by a known process, for example, by reacting an olefin oxide with a starter in the presence of a catalyst. The catalyst is preferably but not limited to alkaline hydroxides, alkaline alkoxides, antimony pentachloride, boron fluoride etherate, or a mixture thereof. The olefin oxide is preferably but not limited to tetrahydrofuran, ethylene oxide, propylene oxide, 1,2-butylene oxide, 2,3-butylene oxide, styrene oxide, or a mixture thereof, particularly preferably ethylene oxide and/or propylene oxide. The initiator is preferably but not limited to a polyhydroxy compound or a polyamino compound. The polyhydroxy compound is preferably but not limited to water, ethylene glycol, 1,2-propanediol, 1,3-propanediol, and diethylene glycol, trimethylolpropane, glycerin, bisphenol A, bisphenol S or mixtures thereof. The polyamino compound is preferably but not limited to ethylene diamine, propylene diamine, butane diamine, hexamethylene diamine, diethylene triamine, toluene diamine or mixtures thereof.

When used in the present invention, the functionality and the hydroxyl value of the organic polyols refer to the average functionality and the average hydroxyl value, unless otherwise specified.

Preferably, the functionality of the organic polyol is 1.7-6, preferably 1.9-4.5, and the hydroxyl value is 150-1100 mgKOH/g, preferably 150-550 mgKOH/g.

Preferably, the content of the component B2) is 4.6-33% by weight, based on the total weight of the polyurethane composition being 100% by weight.

Preferably, the component B2) is selected from one, two or more than two of hydroxyethyl methacrylate, hydroxypropyl methacrylate, hydroxybutyl methacrylate, hydroxyethyl acrylate, hydroxypropyl acrylate and hydroxybutyl acrylate.

As mentioned above, the component B3) is preferably selected from ethylene glycol di(meth)acrylate, propylene glycol di(meth)acrylate, butylene glycol di(meth)acrylate, 1,6-hexanediol di(meth)acrylate, diethylene glycol di(meth)acrylate, triethylene glycol di(meth)acrylate, dipropylene glycol di(meth)acrylate, tripropylene glycol di(meth)acrylate, trimethylolpropane tri(meth)acrylate, 1,2,3-propanetriol tri(meth)acrylate, pentaerythritol tetra(meth)acrylate, or any combination thereof.

Preferably, the content of the component B3) is 1-18% by weight, preferably 1.2-16% by weight, more preferably 1.3-9.6% by weight, particularly preferably 1.5-9% by weight, more particularly 2-8.5% by weight, based on the total weight of the polyurethane composition.

Preferably, the operable time of the polyurethane composition at 35°C is ≥ 68 minutes, preferably ≥ 70 minutes, more preferably ≥ 72 minutes, particularly preferably ≥ 80 minutes.

Preferably, the operable time at 35°C of the polyurethane composition including component B3) is increased by ≥5%, preferably ≥10%,more preferably ≥15%, compared with the polyurethane composition without component B3).

Preferably, the linear shrinkage rate of the polyurethane composition is ≤ 0.95%, preferably ≤ 0.90%, more preferably ≤ 0.80% (test method ISO2577-2007).

We unexpectedly discovered that the polyurethane composition of the present invention including the polyol composition, the isocyanate and the free radical reaction initiator of components B1)-B3) can not only produce polyurethane products of excellent quality, but also bring longer operable time, i.e. achieve enough operable time for uniform filling and curing of products when preparing polyurethane products, especially polyurethane products with relatively large sizes, such as wind turbine blades, ships, etc..

The mold that can be used in the present invention includes, but is not limited to, the mold for wind turbine blades and/or parts thereof, molds for aircrafts and/or parts thereof, molds for ship hulls and/or parts thereof, molds for car bodies and/or parts thereof, and the like. In examples of the present invention, the mold is preferably a mold that can be used for manufacturing wind turbine blades and/or parts thereof by polyurethane vacuum infusion method. The mold may have a heating function.

Experimental results show that the present invention provides a method for processing a material and a method for preparing a resin composite, preferably polyurethane composites in a more efficient and energy-saving way, which can greatly reduce the time and temperature for processing the material/drying and dehumidification. Thus, the production efficiency of resin composites, preferably polyurethane composites, can be greatly improved, costs can also be saved, and it is more beneficial to environmental protection. In particular, for large-scale polyurethane products, the method of the present invention reduces effectively the adverse effects brought by the severe application conditions of polyurethanes (for example, sensitivity to water), and realizes high production efficiency economically and effectively. In addition, the polyurethane composition of the present invention has a long operable time, so that resin composites, preferably polyurethane composites, with uniform quality and excellent physical properties can also be obtained when preparing large-scale polyurethane products.

Those of ordinary skill in the art should understand that the present invention is not limited to the above-mentioned embodiments, and the present invention can be implemented in many other forms without departing from its spirit and scope. Therefore, the examples and embodiments shown are regarded as illustrative rather than restrictive. The present invention may cover various modifications and alternatives without departing from the spirit and scope of the present invention as defined by the appended claims.

The steps a), b), c) and d), and i), ii), iii) and vi) of the present invention are only for conciseness and clarity of description and reference, and there is no sequence between them. Those of ordinary skill in the art can exchange arbitrarily the order of occurrence, and it is not limited by the sequence as described in the claims or the description.

Unless otherwise specified, all technical and scientific terms used herein have the same meaning as commonly understood by those skilled in the art to which the present invention belongs. When there is a conflict between the definition of a term in this text and the meaning commonly understood by those skilled in the art to which the present invention belongs, the definition described in this text shall prevail.

Unless otherwise stated, all numerical values used herein to express the amount of ingredients, reaction conditions, etc. are understood to be modified by the term "about."

As used herein, "and/or" refers to one or all of the mentioned elements.

As used herein, "including" and "comprising" cover the situation where only the mentioned element exists and also the situation where there are other unmentioned elements besides the mentioned element.

Unless otherwise stated, all percentages in this text are percentages by weight.

The present invention is now described through the examples for illustrative purposes and not for limitation.

## Examples

Description of tested performance parameters in the examples of the present application: Functionality refers to a numerical value determined according to the formula in the industry: Functionality = hydroxyl value * molecular weight / 56100; wherein the molecular weight is determined by GPC high performance liquid chromatography;

Isocyanate index refers to a numerical value determined by the following formula:

$$\text{Isocyanate index (\%)} = \frac{\text{Moles of isocyanate groups (NCO groups) in component A}}{\text{Moles of groups reactive toward isocyanate groups in component B}} \text{X } 100\%$$

NCO content refers to the content of NCO groups in the system, measured according to GB/T 12009.4-2016.

Table 1- Description of raw materials:

| Name of raw materials | Specifications/Types | Suppliers |
|---|---|---|
| Polyols | Baydur 78BD085 | Covestro Polymers (China) Co., Ltd. |

(continued)

| Name of raw materials | Specifications/Types | Suppliers |
|---|---|---|
| Isocyanate | Desmodur 44CP20 | Covestro Polymers (China) Co., Ltd. |
| Reinforcing material: glass fiber cloth (unidirectional) | H1-1200 specification: 1200g/m2 | Chongqing Polycomp International Corp. |
| Injection hose/Omega tube | Material: PE | Shanghai Leadgo-tech Co., Ltd |
| Flow medium: flow mesh | Material: PE | Shanghai Leadgo-tech Co., Ltd |
| Peel ply | Polyester peel ply: grammage 95g/$m^2$ | Leadgo-tech Co., Ltd |
| Film/vacuum bag film | Thickness: 50um | Leadgo-tech Co., Ltd |
| Adhesive strip | Type: WD209 | Shanghai KangdDa New Materials Co., Ltd |
| Warming blanket | Specification: 1 m wide, 2 m long, and 30 mm thick | Relevant market |
| gas-permeable material 1 (flow mesh) | Specification: 1.2m*100m (grammage 100g/m2) | Relevant market |
| gas-permeable material 2 (flow mesh) | Specification: 1.2m*100m (grammage 160g/m2) | Relevant market |
| gas-permeable material 3 (flow mesh) | Specification: 1.2m*100m (grammage 200g/m2) | Relevant market |
| gas-permeable material 4 (gas-permeable felt) | Specification: 80cm*100m (grammage 35g/m2) | Relevant market |

Description of test method:
Temperature test: An infrared temperature gun is used to monitor the surface temperature.

**Examples**

Example 1:

A peel ply was laid on the mold. 4 layers of glass fiber cloth with a size of 630*700 mm were laid on the peel ply. Then, another peel ply was laid on the fourth layer of glass fiber cloth. A flow mesh was placed on the peel ply. An injection hose cut into a length of 600 mm was placed beside the flow mesh. The flow mesh was covered with two films. A gas-permeable material 1 was placed between the two films (with a size for covering the glass fiber cloth). The layers laid in the mold were sealed on their peripheries respectively with 2 rounds of adhesive strip, and the two vacuum films were sealed on their peripheries (the air outlet h1 being reserved between the two films, and the air outlet h2 being reserved between the mold and the film close to the mold). A vacuum pump was connected to the injection hose. After vacuumizing to 0-20 mbar for 1 hour, the polyurethane composition was infused. Then, the composition was cured by heating. After curing, it was demolded. The auxiliary materials such as the peel plies and the flow mesh were removed. The prepared resin composite, preferably polyurethane composite, was inspected, which was found to have no surface defects (specifically as shown in Figure 2) and meet the requirements for all physical properties.

Example 2

The steps were the same as those in Example 1, except that the gas-permeable material 2 was used instead of the gas-permeable material 1. After vacuumizing to 0-20 mbar for 1 hour, the polyurethane composition was infused. Then, the composition was cured by heating. After curing, it was demolded. The auxiliary materials such as the peel plies and the flow mesh were removed. The prepared resin composite, preferably polyurethane composite, was inspected, which was found to have no surface defects (specifically as shown in Figure 3) and meet the requirements for all physical properties.

Example 3

The steps were the same as those in Example 1, except that the gas-permeable material 3 was used instead of the gas-permeable material 1. After vacuumizing to 0-20 mbar for 1 hour, the polyurethane composition was infused. Then, the composition was cured by heating. After curing, it was demolded. The auxiliary materials such as the peel plies and the flow mesh were removed. The prepared resin composite, preferably polyurethane composite, was inspected, which was found to have no surface defects (specifically as shown in Figure 4) and meet the requirements for all physical properties.

Example 4

The steps were the same as those in Example 1, except that the gas-permeable material 4 was used instead of the gas-permeable material 1. After vacuumizing to 0-20 mbar for 1 hour, the polyurethane composition was infused. Then, the composition was cured by heating. After curing, it was demolded. The auxiliary materials such as the peel plies and the flow mesh were removed. The prepared resin composite, preferably polyurethane composite, was inspected, which was found to have no surface defects (specifically as shown in Figure 5) and meet the requirements for all physical properties.

Comparative Example 1:

A peel ply was laid on the mold. 4 layers of glass fiber cloth with a size of 630*700 mm were laid on the peel ply. Then, another peel ply was laid on the fourth layer of glass fiber cloth. A flow mesh was placed on the peel ply. An injection hose cut into a length of 600 mm was placed beside the flow mesh. The flow mesh was covered with two films. The layers laid in the mold were sealed on their peripheries respectively with 2 rounds of adhesive strip, and the two vacuum films were sealed on their peripheries (the air outlet 1 being reserved between the two films, and the air outlet 2 being reserved between the mold and the film close to the mold).

A vacuum pump was connected to the injection hose. After vacuumizing to 0-20 mbar for 4 hour, the polyurethane composition was infused. Then, the composition was cured by heating. After curing, it was demolded. The auxiliary materials such as the peel plies and the flow mesh were removed. The prepared resin composite, preferably polyurethane composite, was inspected, which was found to have surface defects (specifically as shown in Figure 6). It indicated that the processing of the material was not successful and the dehumidification did not meet expectations.

Comparative Example 2:

A peel ply was laid on the mold. 4 layers of glass fiber cloth with a size of 630*700 mm were laid on the peel ply. Then, another peel ply was laid on the fourth layer of glass fiber cloth. A flow mesh was placed on the peel ply. An injection hose cut into a length of 600 mm was placed beside the flow mesh. The flow mesh was covered with two films. The layers laid in the mold were sealed on their peripheries respectively with 2 rounds of adhesive strip, and the two vacuum films were sealed on their peripheries (the air outlet 1 being reserved between the two films, and the air outlet 2 being reserved between the mold and the film close to the mold).

Firstly, the heater for the mold was set to 50°C and the mold was heated. The vacuum pump was connected to the injection hose. It was vacuumized to 0-20 mbar and covered with a warming blanket for heating. After being kept at 50°C for 2 hours, it was gradually reduced to 35°C, then cooled down for 1 hour by discontinuing the heating. Then, the polyurethane composition was infused. Then, the composition was cured by heating. After curing, it was demolded. The auxiliary materials such as the peel plies and the flow mesh were removed. The prepared resin composite, preferably polyurethane composite, was inspected, which was found to have surface defects (specifically as shown in Figure 7). It indicated that the processing of the material was not successful and the dehumidification did not meet expectations.

It can be seen from the above experimental results that the method for processing a material of the present invention including arranging a gas-permeable material between two films and features compatible with it can simply, economically and effectively realize the dehumidification process of the material. Not only no heating is required, but also the time point for infusion can be brought forward greatly and the infusion can be speeded up. Thus, the resources and the time can be saved, the production efficiency and the yield can be improved, and the promotion of related environmental protection industries can be facilitated enormously.

## Claims

**1.** A method for processing a material used for preparing resin composites, including:

a) placing at least a reinforcing material (2), optionally a core material (4), and optionally a flow medium (5) in a mold (1);
b) covering the at least a reinforcing material (2), optionally a core material (4), and optionally a flow medium (5) with at least two films (3a, 3b);
c) placing at least a gas-permeable material (6) between the at least two films (3a, 3b);
d) sealing the peripheries of the at least two films (3a, 3b) and arranging at least an air outlet h1 (h1) for vacuumizing, and sealing the periphery of the mold (1) and the periphery of the film (3a) close to the mold and arranging at least an air outlet h2 (h2) for vacuumizing, the vacuumizing being carried out through the air outlet h1 (h1) and the air outlet h2 (h2).

**2.** The method according to claim 1, **characterized in that** the gas-permeable material (6) covers at least partially the upper surface (2a) of the reinforcing material (2) or the flow medium (5), preferably a surface area of ≥60%, more preferably a surface area of ≥70%, particularly preferably a surface area of ≥95%, more particularly preferably a surface area of 100% of the upper surface (2a) of the reinforcing material (2) or the flow medium (5).

**3.** The method according to claim 1 or 2, **characterized in that** the processing temperature applicable for the method is <60°C, preferably <50°C, more preferably ≤40°C.

**4.** The method according to any one of claims 1 to 3, **characterized in that** the method does not include heating.

**5.** The method according to any one of claims 1 to 4, **characterized in that** the time required for the processing is <5 hours, preferably ≤4 hours, more preferably ≤3 hours, particularly preferably ≤2.5 hours.

**6.** The method according to any one of claims 1 to 5, **characterized in that** the processing time required for the method with the step c) is reduced by ≥10%, preferably ≥20%, more preferably ≥40%, compared with that for the method without the step c).

**7.** The method according to any one of claims 1 to 6, **characterized in that** the resin is selected from polyurethane, and the polyurethane is prepared by the reaction of a polyurethane composition comprising:

component A including:

A1) one or more polyisocyanates;
A2) at least a free radical initiator;
A3) at least a β-dicarbonyl compound.

**8.** The method according to any one of claims 1 to 7 **characterized in that** the resin is selected from polyurethane, and the polyurethane is prepared by the reaction of a polyurethane composition comprising:

component B) including:

B1) one or more organic polyols,
B2) one or more compounds with the structure of formula (I):

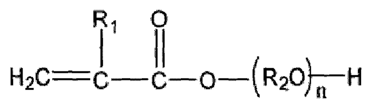

I

wherein R1 is selected from hydrogen, methyl or ethyl; R2 is selected from alkylene groups having 2-6 carbon atoms, propane-2,2-bis(4-phenylene), 1,4-xylylene, 1,3-xylylene, 1,2-xylylene; n is an integer selected from 1-6.

**9.** The method according to any one of claims 1 to 9, **characterized in that** the resin is selected from polyurethane, and the polyurethane is prepared by the reaction of a polyurethane composition comprising:

B3) at least a polyfunctional (meth)acrylate without hydroxyl group.

**10.** A method for preparing a resin composite, including:

the method for processing a material used for preparing resin composites according to any one of claims 1 to 9; introducing a resin composition and curing to prepare the resin composite.

**11.** The method according to claim 10, **characterized in that** the resin composition comprises:

component A), including:

A1) one or more polyisocyanates;
A2) at least a free radical initiator;
A3) at least a β-dicarbonyl compound.

**12.** A laminate, including:

i) at least a reinforcing material (2), optionally a core material (4), and optionally a flow medium (5);
ii) at least two films (3a, 3b) covering the at least a reinforcing material (2), optionally a core material (4), and optionally a flow medium (5);
iii) at least a gas-permeable material (6) located between the at least two films (3a, 3b);
iv) wherein the peripheries of the at least two films (3a, 3b) are sealed and at least an air outlet h1 (h1) for vacuumizing is arranged between the at least two layers of films (3a, 3b), and the periphery of the mold (1) and the periphery of the film (3a) close to the mold are sealed and at least an air outlet h2 (h2) for vacuumizing is arranged between the mold (1) and the film (3a) close to the mold.

**13.** The laminate according to claim 12, **characterized in that** the gas-permeable material (6) covers at least partially the upper surface (2a) of the reinforcing material (2) or the flow medium (5), preferably the gas-permeable material (6) covers at least partially a surface area of ≥60%, more preferably a surface area of ≥70%, particularly preferably a surface area of ≥95%, more particularly preferably a surface area of 100% of the upper surface (2a) of the reinforcing material (2), the core material or the flow medium.

**14.** The laminate according to claim 12 or 13, **characterized in that** the time required for processing the material using the laminate with iii) is reduced by ≥10%,preferably ≥20%, and more preferably ≥40%, compared with that using the laminate without iii).

**15.** A resin composite prepared by the method according to any one of claims 10 to 11.

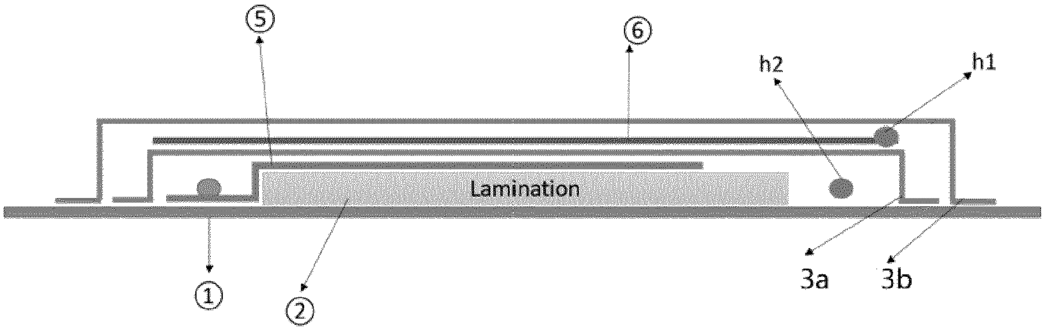


Fig. 1

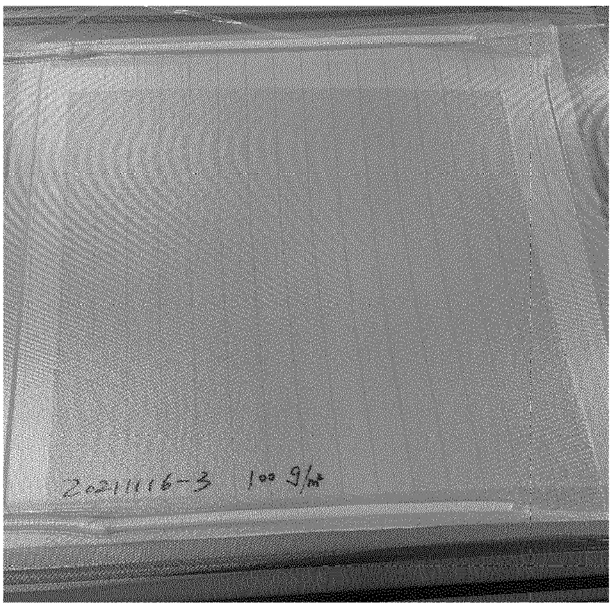


Fig. 2

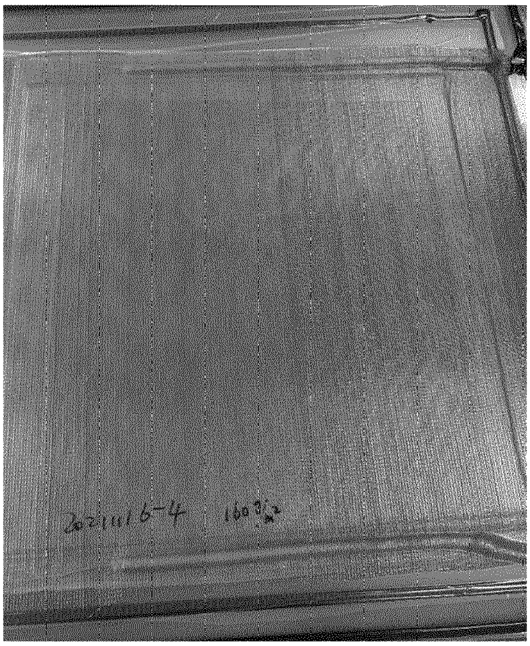

Fig. 3

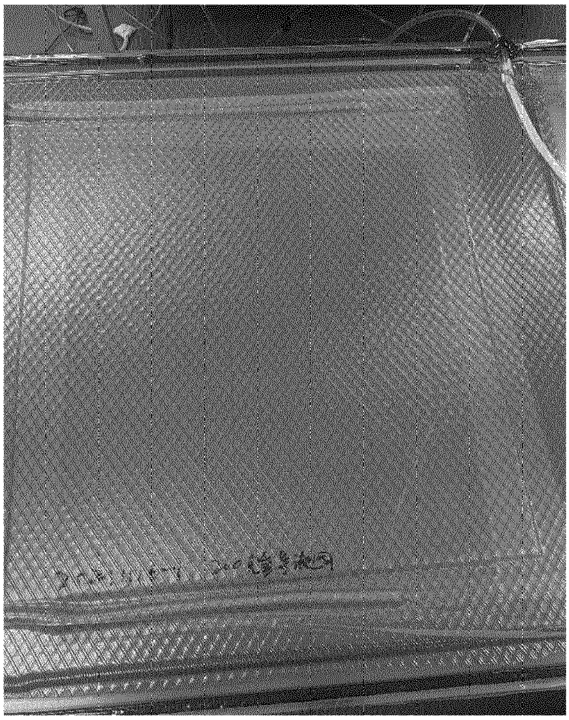

Fig. 4

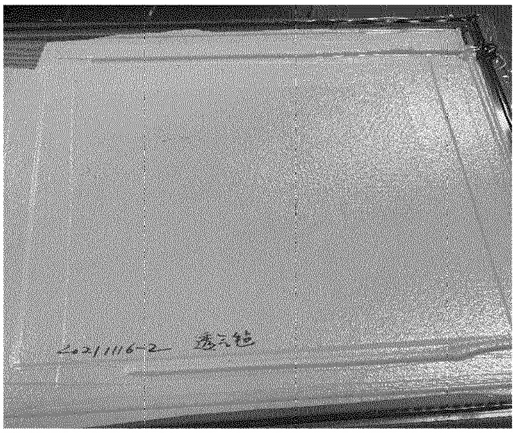

Fig. 5

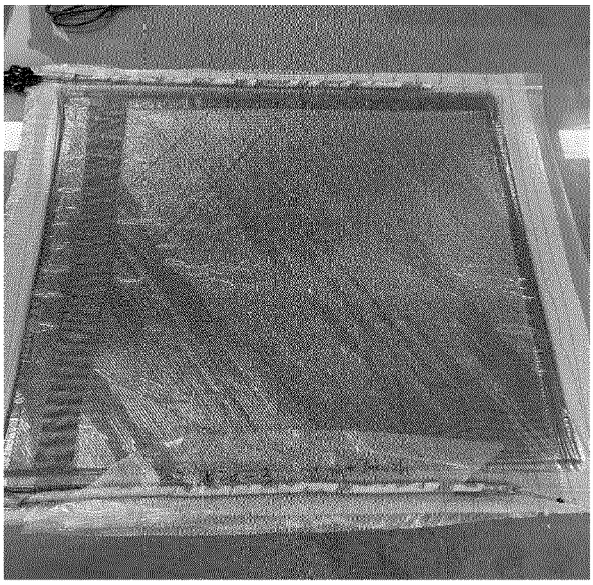

Fig. 6

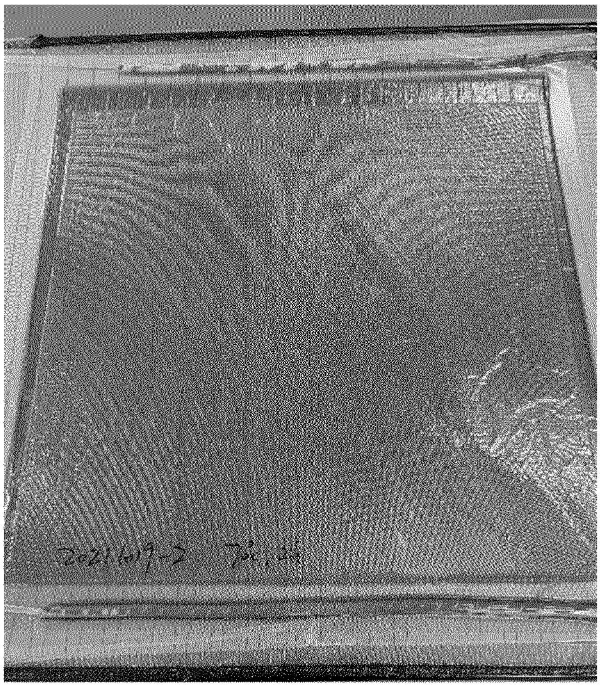

Fig. 7

Europäisches Patentamt
European Patent Office
Office européen des brevets

# EUROPEAN SEARCH REPORT

Application Number
EP 22 15 1554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/334150 A1 (ROBERTS RICHARD [AU]) 23 November 2017 (2017-11-23) | 1-3,5,6, 10,12, 13,15 | INV. B29C70/44 B32B27/40 B32B27/30 |
| Y | * abstract; figures 4,7 * * paragraph [0061] * * paragraph [0058] * * paragraph [0057] * * paragraph [0054] * * paragraph [0060] - paragraph [0061] * * paragraph [0025] - paragraph [0026] * * paragraph [0004] - paragraph [0005] * * paragraph [0053] * * paragraph [0052] * ----- | 4,7-9,11 | ADD. C08G18/67 C08L75/16 C08F290/06 C08G18/16 C08G18/40 C08G18/72 C08K5/07 C08L75/04 |
| X | US 2008/136060 A1 (SHPIK PETER [US] ET AL) 12 June 2008 (2008-06-12) * abstract; figure 1 * * paragraph [0032] - paragraph [0033] * * paragraph [0037] - paragraph [0038] * * paragraph [0030] * * paragraph [0028] * * paragraph [0001] * * paragraph [0027] * * paragraph [0035] * * paragraph [0039] * * paragraph [0044] * * paragraph [0026] * ----- | 1-6,10, 12-15 | TECHNICAL FIELDS SEARCHED (IPC) B29C B32B C08G C08L C08F C08K |
| Y | US 2014/001682 A1 (SCHNEIDERBAUER GERNOT [AT] ET AL) 2 January 2014 (2014-01-02) * paragraph [0053] * ----- | 4 | |
| Y | EP 3 129 422 A1 (COVESTRO DEUTSCHLAND AG [DE]) 15 February 2017 (2017-02-15) * paragraph [0006] - paragraph [0013] * * paragraph [0041] * * paragraph [0018] * * paragraph [0017] * ----- -/-- | 7,8,11 | |

The present search report has been drawn up for all claims

1

| Place of search | Date of completion of the search | Examiner |
|---|---|---|
| The Hague | 16 June 2022 | Barunovic, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 15 1554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 993 202 A1 (EVONIK DEGUSSA GMBH [DE]) 9 March 2016 (2016-03-09)<br>* paragraph [0059] *<br>* paragraph [0001] *<br>* paragraph [0054] *<br>* paragraph [0043] *<br>* paragraph [0023] *<br>----- | 9 | |
| | | | TECHNICAL FIELDS SEARCHED (IPC) |

The present search report has been drawn up for all claims

1

| Place of search | Date of completion of the search | Examiner |
|---|---|---|
| The Hague | 16 June 2022 | Barunovic, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 22 15 1554

This annex lists the patent family members relating to the patent documents cited in the above-mentioned European search report. The members are as contained in the European Patent Office EDP file on
The European Patent Office is in no way liable for these particulars which are merely given for the purpose of information.

16-06-2022

| Patent document cited in search report | Publication date | Patent family member(s) | Publication date |
|---|---|---|---|
| US 2017334150 A1 | 23-11-2017 | AU 2016203289 A1 | 07-12-2017 |
| | | CN 107399093 A | 28-11-2017 |
| | | EP 3260281 A1 | 27-12-2017 |
| | | JP 2018024229 A | 15-02-2018 |
| | | JP 2022062727 A | 20-04-2022 |
| | | KR 20170131277 A | 29-11-2017 |
| | | US 2017334150 A1 | 23-11-2017 |
| US 2008136060 A1 | 12-06-2008 | CA 2671700 A1 | 19-06-2008 |
| | | EP 2099600 A2 | 16-09-2009 |
| | | JP 2010512257 A | 22-04-2010 |
| | | US 2008136060 A1 | 12-06-2008 |
| | | WO 2008073823 A2 | 19-06-2008 |
| US 2014001682 A1 | 02-01-2014 | AT 511113 A2 | 15-09-2012 |
| | | BR 112013022365 A2 | 06-12-2016 |
| | | CA 2827545 A1 | 13-09-2012 |
| | | CN 103402741 A | 20-11-2013 |
| | | EP 2681037 A1 | 08-01-2014 |
| | | ES 2529327 T3 | 19-02-2015 |
| | | RU 2013144592 A | 10-04-2015 |
| | | US 2014001682 A1 | 02-01-2014 |
| | | WO 2012119163 A1 | 13-09-2012 |
| EP 3129422 A1 | 15-02-2017 | CA 2944545 A1 | 15-10-2015 |
| | | CN 104974502 A | 14-10-2015 |
| | | DK 3129422 T3 | 26-04-2021 |
| | | EP 3129422 A1 | 15-02-2017 |
| | | ES 2866045 T3 | 19-10-2021 |
| | | JP 2017513979 A | 01-06-2017 |
| | | PT 3129422 T | 30-04-2021 |
| | | US 2017037203 A1 | 09-02-2017 |
| | | US 2019225761 A1 | 25-07-2019 |
| | | WO 2015155195 A1 | 15-10-2015 |
| EP 2993202 A1 | 09-03-2016 | BR 112017004640 A2 | 08-05-2018 |
| | | CN 106661305 A | 10-05-2017 |
| | | EP 2993202 A1 | 09-03-2016 |
| | | EP 3191543 A1 | 19-07-2017 |
| | | ES 2710598 T3 | 26-04-2019 |
| | | JP 2017527671 A | 21-09-2017 |
| | | KR 20170056598 A | 23-05-2017 |
| | | TW 201623386 A | 01-07-2016 |
| | | US 2017275430 A1 | 28-09-2017 |
| | | WO 2016037886 A1 | 17-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 106142593 B
- CN 110625843 A
- CN 112912236 A
- GB T1200942016 A